# EUROPÄISCHE PATENTSCHRIFT

(11) **EP 2 215 009 B1**
(45) Veröffentlichungstag und Bekanntmachung des Hinweises auf die Patenterteilung: **02.11.2011**
(21) Anmeldenummer: 08801846.0
(22) Anmeldetag: 05.09.2008
(51) Int. Cl.: B01D 53/00, C01B 3/50, C10J 3/82, C10L 3/10

(54) **VERFAHREN ZUR BEHANDLUNG EINES CO2 ENTHALTENDEN PROZESSGASSTROMS**
METHOD FOR TREATING A PROCESS GAS FLOW CONTAINING CO2
PROCÉDÉ DE TRAITEMENT D'UN FLUX DE GAZ DE PROCESSUS CONTENANT DU CO2

(30) Priorität: 23.11.2007 DE 102007056625
(43) Veröffentlichungstag der Anmeldung: 11.08.2010
(73) Patentinhaber: Lurgi GmbH, 60439 Frankfurt am Main (DE)
(72) Erfinder: KOSS, Ulrich, 8702 Zollikon (CH); MEYER, Manfred, 61381 Friedrichsdorf (DE); SCHRIEFL, Alexander, 60385 Frankfurt/Main (DE)
(86) Internationale Anmeldenummer: PCT/EP2008/007251
(87) Internationale Veröffentlichungsnummer: WO 2009/065453

(56) Entgegenhaltungen:
- DE-A1- 3 639 779
- US-A- 3 453 835
- US-A- 4 710 213
- U. KOSS, H. SCHLICHTING: "Lurgi's MPG gasification plus RECTISOL gas purification - advanced process combination for reliable syngas production" GASIFICATIONTECHNOLOGY COUNCIL CONFERENCE, SAN FRANCISCO, OCTOBER 9 - 12, 2005, 9. Oktober 2005 (2005-10-09), - 12. Oktober 2005 (2005-10-12) Seite 1-12, XP002585748

## Beschreibung

Die Erfindung betrifft ein Verfahren zur Behandlung eines bei der Produktion von reinem Synthesegas aus den Rohgasen der partiellen Oxidation von Schwerölen, Petrolkoks oder Abfallstoffen oder bei der Kohlevergasung oder bei der Aufbereitung von der Erdgas oder Erdölbegleitgas anfallenden CO₂ enthaltenden Prozessgasstroms, aus dem CO₂ physisorptiv oder chemisorptiv entfernt, das mit CO₂ beladene Lösungsmittel auf einen niedrigeren Druck entspannt und CO₂ desorbiert wird.

Die unter den Verfahrensbezeichnungen Rectisol^{®}, Purisol^{®}, Selexol^{®}, aMDEA^{®} und Heißpottaschewäsche bekannten Prozesse dienen der Produktion von reinem Synthesegas aus den Rohgasen der partiellen Oxidation von Schwerölen, Petrolkoks oder Abfallstoffen oder aus der Kohlevergasung oder aus der Aufbereitung von Erdgas oder Erdölbegleitgas.

Als Ausgangsmaterial dient beim Rectisol^{®}-Verfahren Rohgas aus der partiellen Oxidation von Schwerölen, Petrolkoks oder Abfallstoffen oder aus der Kohlevergasung. Das Rohgas enthält neben den gewünschten Produktkomponenten H₂ und CO als unerwünschte Produktkomponenten CO₂, H₂O, H₂S, CS₂, COS, HCN, NH₃, organische Schwefelverbindungen, Metallcarbonyle sowie Kohlenwasserstoffe, die abgetrennt werden müssen, wozu kaltes Methanol als physikalisches Lösungsmittel eingesetzt wird. Anschließend werden die absorbierten Produktkomponenten durch Druckreduzierung und Auskochen des Lösungsmittels wieder desorbiert und in weiterführenden Anlagen behandelt. Da die Löslichkeiten der unerwünschten Produktkomponenten in kaltem Methanol sehr unterschiedlich sind, ist ein selektives Abscheiden der Produktkomponenten, beispielsweise von H₂S und CO₂, möglich. Das Rohgas wird gekühlt einem mit einem Druck von 30 bis 60 bar, absolut, und mit kaltem CO₂ beladenen Methanol arbeitenden H₂S-Absorber zugeführt, in dessen Vorwaschstufe zunächst Verunreinigungen, wie zum Beispiel HCN und NH₃ entfernt werden. In der zweiten Stufe des H₂S-Absorbers werden H₂S und die andern Schwefelverbindungen absorbiert, so dass der Restgehalt an Schwefel < 0,1 ppm beträgt. Das den H₂S-Absorber verlassende beladene Methanol wird auf einen mittleren Druck entspannt und die dabei desorbierten Gase H₂ und CO in das Rohgas rückgeführt. Anschließend wird das Methanol auf Siedetemperatur erhitzt und "ausgekocht"; dabei werden alle absorbierten Gase freigesetzt und das H₂S-reiche Gas einer CLAUS-Anlage zur Schwefelgewinnung aufgegeben. Ein Teil des in dem schwefelfreien Synthesegas enthaltenen CO wird zu CO₂ konvertiert, so dass die CO₂-Konzentration typischerweise auf ca. 33 % steigt. Anschließend wird das gekühlte Gas einem zweistufigen CO₂-Absorber zugeführt. Das aus dem CO₂-Absorber abgeführte beladene Methanol wird auf einen niedrigeren Druck entspannt und dadurch abgekühlt. Das hierbei freigesetzte CO₂ ist schwefelfrei und kann entweder an die Atmosphäre abgegeben oder u.a. für die Produktion von Harnstoff eingesetzt werden. Das in dem CO₂-Absorber anfallende Synthesegas mit einer CO₂-Konzentration von etwa 3 % wird in die Methanolsynthese geführt. Beim Purisol^{®}-Verfahren wird an Stelle von Methanol N-Methyl-2-Pyrrolidone (NMP) als physikalisches Lösungsmittel eingesetzt. Das CO₂ aus dem Rohgas wird arbeitsleistend in die Gasturbine entspannt.

Beim aMDEA^{®}-Verfahren tritt das zu behandelnde Rohgas am Boden einer Absorptionskolonne mit strukturierter oder Schütt-Füllkörperpackung ein, in der das Rohgas mit einer am Kopf der Absorptionskolonne zugeführten gekühlten wässrigen Lösung von Methyldiethanolamin (MDEA), das zur Steigerung der CO₂-Ausbeute ein Aktivierungsmittel (a) enthält, im Gegenstrom gewaschen wird. Am Kopf der Absorptionskolonne wird das gereinigte Gas abgezogen. Die am Sumpf der Absorptionskolonne austretende mit CO₂ und H₂S beladene aMDEA-Lösung kann entweder direkt oder nach dem Entspannen auf einen niedrigeren Druck erhitzt werden. Als Wärmequelle dient heiße, regenerierte aMDEA-Lösung aus der Regenerationskolonne. In der Regenerationskolonne wird die beladenen aMDEA-Lösung durch Wiedererhitzen vollständig regeneriert und gekühlt zum Kopf der Absorptionskolonne zurückgeführt. Am Kopf der Regenerationskolonne wird ein CO₂ und H₂S enthaltender Gasstrom abgezogen. Das abgetrennte H₂S-reiche Gas wird entweder in eine CLAUS-Anlage oder zu einer Nachverbrennung geleitet. Die unterschiedliche Reaktionsgeschwindigkeit der Amine für H₂S und CO₂ sind die Grundlage für eine selektive Absorption von H₂S und für die Abtrennung von CO₂.

Die Veröffentlichung "Lurgi's MPG gasification plus RECTISOL gas purification - advanced process combination for reliable syngas production", U. Koss, H. Schlichting, Gasification Technology Council Conference, San Francisco, 9. - 12.10.2005, beschreibt das Rectisol®-Verfahren zur Herstellung von hochreinem Synthesegas. Bei der Reinigung des Synthesegases fällt dabei ein mit N₂, CO, H₂ und CH₄ verunreinigtes CO₂ an. Um hieraus reines CO₂ zu erhalten, werden daher weitere Arbeitsschritte benötigt.

Die deutsche Offenlegungsschrift DE 36 39 779 A1 lehrt ein Verfahren zur Gewinnung von CO₂ aus einem CO₂-reichen Erdgas, bei dem nach Abkühlung und partieller Kondensation des unter erhöhtem Druck stehenden Erdgases ein CO₂-reiches Kondensat in eine Rektifiziersäule gegeben wird, in der leichtere Begleitstoffe des CO₂ abgetrennt und über Kopf abgezogen werden und in der gereinigtes CO₂ aus dem Sumpf als Produktstrom gewonnen wird.

In der Druckschrift US 4 710 213 A wird ein Verfahren zur Abtrennung von CO₂ aus einem CO₂ und leichte Kohlenwasserstoffe enthaltenden Gasgemisch durch mehrstufige Destillation beschrieben, wobei das zu zerlegende Gasgemisch in einer ersten Zerlegungsstufe in eine im wesentlichen die gesamten C₁- und C₂-Kohlenwasserstoffe sowie einen Teil des CO₂ enthaltende Kopffraktion und eine im wesentlichen C₃₊-Kohlenwasserstoffe und den größten Teil des CO₂ enthaltende Sumpffraktion getrennt wird, und in einer zweiten Zerlegungsstufe die Sumpffraktion in eine CO₂-Fraktion und in eine C₃₊-Kohlenwasserstoff-Fraktion zerlegt wird.

Schließlich beschreibt die US-Patentschrift US 3 453 835 A ein Verfahren zur Reinigung hochverdichteter CO₂-haltiger Gase durch Waschen bei tiefen Temperaturen mit einem organischen polaren Lösungsmittel, das durch Entspannen und Strippen regeneriert wird, nachdem bei Umgebungstemperatur kondensierende Gaskomponenten abgeschieden worden sind. Es ist dadurch gekennzeichnet, dass das Gas bis zur beginnenden Kondesation von CO₂ vorgekühlt und danach mit Absorptionsmittel, das bei der Regeneration durch Entspannen unter Verdampfen des aufgenommenen CO₂ gekühlt ist, unter dem Taupunkt des CO₂ weiter direkt gekühlt und gewaschen wird.

Der Nachteil der vorstehend beschriebenen physisorptiv und chemisorptiv arbeitenden Absorptionsverfahren für die Entfernung der im Rohgas aus der partiellen Oxidation von Schweröl, Petrolkoks und Abfallstoffen, der Kohlevergasung sowie der Aufbereitung von Erdgas und Erdölbegleitgas enthaltenen, unerwünschten Komponenten CO, H₂O, H₂S, COS, HCN, NH₃, organische Schwefelverbindungen, Metallcarbonyle sowie Kohlenwasserstoffe besteht darin, dass das erzeugte CO₂ noch insgesamt mit 0,1 bis 20 Vol. %, insbesondere 0,5 bis 2,5 Vol. %, eine oder mehrere der Komponenten N₂, CO, H₂ und CH₄ enthält und deshalb nicht für eine Reihe von Einsatzzwecken geeignet ist.

Es ist die Aufgabe der vorliegenden Erfindung, das eingangs beschriebene Verfahren so weiterzubilden, dass das mittels eines physisorptiv oder chemisorptiven arbeitenden Absorptionsverfahrens aus einem Rohgas gewonnene CO₂ eine möglichst große Reinheit besitzt und unmittelbar als Wertprodukt eingesetzt werden kann; insbesondere soll das CO₂ den für das Verpressen in Erdöllagerstätten zur verbesserten Ölförderung bei gleichzeitiger Endlagerung des CO₂ in den Erdöllagerstätten gestellten Qualitätsanforderungen entsprechen.

Gelöst ist diese Aufgabe dadurch, dass das mit insgesamt 0,1 bis 20 Vol. %, vorzugsweise 0,5 bis 10 Vol. %, insbesondere 0,5 bis 2,5 Vol. %, einer oder mehreren der Komponenten N₂, CO, H₂ und CH₄ verunreinigte CO₂ bei Raumtemperatur auf einen Druck von wenigstens 60 bar, absolut, oder unterhalb der kritischen Temperatur von CO₂ von 31 ° C auf wenigstens 70 bar, absolut, verdichtet wird und die in dem dabei gewonnenen überwiegend einen flüssigen Zustand aufweisenden CO₂ enthaltenen gasförmigen Verunreinigungen durch Strippen des CO₂ mit gasförmigem als Strippgas dienendem CO₂ entfernt und CO₂ als Flüssigkeit erhalten wird. Beim Strippen werden aus dem flüssigen CO₂ durch das Durchleiten des Strippgases gegen die Fließrichtung des flüssigen CO₂ die Verunreinigungen entfernt und in das Strippgas übergeführt, da der Dampfdruck der aus dem flüssigen CO₂ zu entfernenden Verunreinigungen größer als in dem Strippgas ist und daher ein Übertritt von dem flüssigen CO₂ in das Strippgas erfolgt.

Im Rahmen der Ausgestaltung des Verfahren wird das CO₂ auf einen Druck von 10 bis 30 bar, absolut, verdichtet und auf eine Temperatur von - 40 bis - 5° C abgekühlt.

Zur Erzeugung des Strippgases wird eine entsprechende Menge des im Kolonnensumpf befindlichen flüssigen CO₂ kontinuierlich verdampft.

Das die Verunreinigungen enthaltende Strippgas wird am Kopf der Strippkolonne abgetrieben und nach einem weiteren Erfindungsmerkmal rückgekühlt, um wenigstens einen Teil des CO₂ aus dem Strippgas auszukondensieren und in den Sumpf der Strippkolonne zurückzuleiten.

Eine Ausgestaltung der Erfindung besteht darin, dass das beladene Strippgas in die Absorptionsstufe des Prozesses geleitet wird.

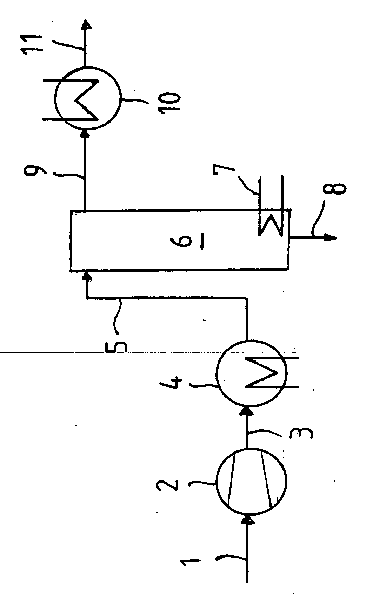

Das erfindungsgemäße Verfahren wird nachstehend durch ein Ausführungsbeispiel in Verbindung mit einem in der Zeichnung wiedergegebenen Grundfließschema näher erläutert. Aus durch partielle Oxidation von Schweröl gewonnenem Rohgas werden die unerwünschten Komponenten CO₂, H₂O, H₂S, COS, HCN, NH₃, organische Schwefelverbindungen, Metallcarbonyle, CₙHₘ sowie weitere Verunreinigungen, wie Harzbildner und Merkaptane nach dem Rectisol^{®}-Verfahren typischerweise unter Verwendung von Methanol absorbiert. Durch den Zusatz von Wasserdampf wird ein großer Teil des CO des durch das Rectisol^{®}- Verfahren von den unerwünschten Komponenten und Verunreinigungen weitgehend gereinigten Synthesegases zu CO₂ und weiterem H₂ katalytisch konvertiert.

Von dem gereinigten Synthesegas wird das insgesamt noch 2,0 Vol. %, N₂, CO, H₂ und CH₄ als Verunreinigungen enthaltende CO₂ abgetrennt und über Leitung (1) einem Kompressor (2), in dem das CO₂ auf einen Druck von 25 bar, absolut, verdichtet wird, aufgegeben und anschließend über Leitung (3) einer Kälteanlage (4), in der eine Abkühlung des CO₂ auf eine Temperatur von -25° C, erfolgt, zugeführt. Unter diesen Bedingungen wird das CO₂ nahezu vollständig in den flüssigen Zustand überführt, während die das CO₂ verunreinigenden Komponenten nahezu vollständig gasförmig bleiben. Das flüssige CO₂ wird über Leitung (5) dem Kopf einer Strippkolonne (6) zugeleitet und im Gegenstrom zu gasförmigem als Strippgas dienenden CO₂ durch die Strippkolonne (6) geleitet, in deren Sumpf das Strippgas durch Verdampfen einer kleinen Menge von flüssigem CO₂ mittels einer geeigneten Wärmequelle (7) erzeugt wird. Durch das Strippgas werden die Verunreinigungen aus dem flüssigen CO₂ entfernt und in das gasförmige CO₂ überführt. Am Boden der Strippkolonne (6) wird über Leitung (8) flüssiges reines CO₂ abgezogen. Das am Kopf der Strippkolonne (6) abgezogene die Verunreinigungen enthaltende Strippgas kann über Leitung (9) einer Kälteanlage (10), in der ein Teil des CO₂ kondensiert wird, zugeleitet werden. Das verbleibende mit den Verunreinigungen beladene Strippgas wird über die Leitung (11) dem Roh-Synthesegas zugeführt. Sollte der CO₂-Gehalt der verbleibenden Strippgasmenge zu groß und damit eine Rückführung in das Roh-Synthesegas unwirtschaftlich sein, kann das Strippgas in den Prozess, beispielsweise in das Rectisol^{®}-Verfahren, zur Produktion von reinem Synthesegas zurückgeleitet und in einer geeigneten Absorptionskolonne zusammen mit dem zurückzuführenden Entspannungsgasstrom des Prozesses durch Absorption vollständig von CO₂ befreit werden. Als Kälteanlage für die Verflüssigung des CO₂ kann auch die im Rahmen des Prozesses benutzte Kälteanlage eingesetzt werden. Darüber hinaus besteht die Möglichkeit eines Kälteaustausches mit entsprechenden Strömen des Prozesses.

Die mit einer praktischen Ausführungsform der Erfindung ermittelten Daten für Temperaturen, Drücke und Zusammensetzung der Stoffströme sind in der nachfolgenden Tabelle mit Bezugnahme auf das in der Zeichnung dargestellte Grundfließschema angegeben:

| Leitung | 1 | 3 | 5 | 8 | 9 |
|---|---|---|---|---|---|
| Temperatur (° C) | 20 | 20 | -25 | -25 | -25 |
| Druck ( bar, absolut) | 1 | 25 | 25 | 25 | 25 |
| Zusammensetzung Vol. % (trocken gerechnet) | | | | | |
| N₂ | 1,0 | 1,0 | 1,0 | Spuren | 16 |
| H₂ | 0,5 | 0,5 | 0,5 | Spuren | 8 |
| CO | 0,5 | 0,5 | 0,5 | Spuren | 8 |
| CH₄ | 3,0 | 3,0 | 3,0 | Spuren | 48 |

Die mit der Erfindung erzielten Vorteile sind insbesondere darin zu sehen, dass praktisch das gesamte CO₂ in reiner Form gewonnen wird und die Verluste der Wertgase CO, H₂ und CH₄ gegen Null reduziert werden.

## Patentansprüche

1. Verfahren zur Behandlung eines bei der Produktion von reinem Synthesegas aus dem Rohgas des bei der partiellen Oxidation von Schwerölen, Petrolkoks und Abfallstoffen oder bei der Kohlevergasung oder bei der Aufbereitung von Erdgas oder und Erdölbegleitgas anfallenden CO₂ enthaltenden Prozessgasstroms, aus dem CO₂ physisorptiv oder chemisorptiv entfernt, das mit CO₂ beladene Lösungsmittel auf einen niedrigeren Druck entspannt und CO₂ desorbiert wird, **dadurch gekennzeichnet, dass** das insgesamt mit 0,1 bis 20 Vol. % einer oder mehrerer der Komponenten N₂, CO, H₂ und CH₄ verunreinigte CO₂ bei Raumtemperatur auf einen Druck von wenigstens 60 bar, absolut, oder unterhalb der kritischen Temperatur von CO₂ von 31° C auf wenigstens 70 bar, absolut, verdichtet und die in dem dabei gewonnenen einen flüssigen Zustand aufweisenden CO₂ enthaltenen Verunreinigungen durch Strippen des CO₂ mit im Gegenstrom geführtem gasförmigen CO₂ entfernt werden.

2. Verfahren nach Anspruch 1, **dadurch gekennzeichnet, dass** das CO₂ auf einen Druck von 10 bis 30 bar, absolut, verdichtet und auf eine Temperatur von - 40 bis - 5° C abgekühlt wird.

3. Verfahren nach einem der Ansprüche 1 und 2, **dadurch gekennzeichnet, dass** mit insgesamt 0,5 bis 10 Vol. %, insbesondere 0,5 bis 2,5 Vol. %, einer oder mehrerer der Komponenten N₂, CO, H₂ und CH₄ verunreinigtes CO₂ eingesetzt wird.

4. Verfahren nach einem der Ansprüche 1 bis 3, **dadurch gekennzeichnet, dass** das mit einer oder mehreren der Komponenten N₂, CO, H₂ und CH₄ beladene Strippgas dem Rohgas zugesetzt wird.

5. Verfahren nach einem der Ansprüche 1 bis 4, **dadurch gekennzeichnet, dass** ein Teil des mit einem oder mehreren der Komponenten N₂, CO, H₂ und CH₄ beladene Strippgas kondensiert, das Kondensat in den Sumpf der Absorptionskolonne rückgeleitet und das verbleibende Strippgas dem Rohgas zugesetzt wird.

6. Verfahren nach Anspruch 1 bis 5, **dadurch gekennzeichnet, dass** das mit einer oder mehrerer der Komponenten N₂, CO, H₂ und CH₄ beladene Strippgas in die Absorptionsstufe des Prozesses geleitet wird.

## Claims

1. A process for the treatment of a process gas stream containing CO₂, which is obtained in the production of pure synthesis gas from the raw gas of the gas stream obtained in the partial oxidation of heavy oils, petroleum coke and wastes or in the gasification of coal or in the processing of natural gas or petroleum gas, from which CO₂ is removed physisorptively or chemisorptively, the solvent loaded with CO₂ is expanded to a lower pressure and CO₂ is desorbed, **characterized in that** the CO₂ contaminated with a total of 0.1 to 20 vol-% of one or more of the components N₂, CO, H₂ and CH₄ is condensed at room temperature to a pressure of at least 60 bar abs., or to at least 70 bar abs. below the critical temperature of CO₂ of 31 °C, and the impurities contained in the CO₂ obtained thereby in a liquid condition are removed by stripping the CO₂ with countercurrently guided gaseous CO₂.

2. The process according to claim 1, **characterized in that** the CO₂ is condensed to a pressure of 10 to 30 bar abs. and cooled to a temperature of -40 to -5°C.

3. The process according to any of claims 1 and 2, **characterized in that** CO₂ contaminated with a total of 0.5 to 10 vol-%, in particular 0.5 to 2.5 vol-% of one or more of the components N₂, CO, H₂ and CH₄ is used.

4. The process according to any of claims 1 to 3, **characterized in that** the stripping gas loaded with one or more of the components N₂, CO, H₂ and CH₄ is added to the raw gas.

5. The process according to any of claims 1 to 4, **characterized in that** a part of the stripping gas loaded with one or more of the components N₂, CO, H₂ and CH₄ is condensed, the condensate is recirculated into the bottom of the absorption column, and the remaining stripping gas is added to the raw gas.

6. The process according to claims 1 to 5, **characterized in that** the stripping gas loaded with one or more of the components N₂, CO, H₂ and CH₄ is introduced into the absorption stage of the process.

## Revendications

1. Procédé de traitement d'un courant de gaz de processus, qui contient du CO₂, se produisant lors de l'oxydation partielle d'huiles lourdes, de coke, de pétrole et de résidus ou lors de la gazéification du charbon ou lors du traitement du gaz naturel ou du gaz associé au pétrole, dont on élimine du CO₂ par sorption physique ou par sorption chimique, on détend le solvant chargé de CO₂ jusqu'à une pression plus basse et on désorbe du CO₂, **caractérisé en ce qu'**on comprime le CO₂ pollué en tout par de 0,1 à 20 % en volume d'un ou plusieurs des constituants N₂, CO, H₂ et CH₄ à la température ambiante jusqu'à une pression d'au moins 60 bar, absolue, ou en dessous de la température critique du CO₂ de 31°C jusqu'à au moins 70 bar, absolue, et on élimine les impuretés contenues dans le CO₂ ainsi obtenu et ayant un état liquide par entraînement du CO₂ par du CO₂ gazeux à contre-courant.

2. Procédé suivant la revendication 1, **caractérisé en ce qu'**on comprime le CO₂ jusqu'à une pression de 10 à 30 bar, absolue, et on le refroidit jusqu'à une température de -40° à -5°C.

3. Procédé suivant l'une des revendications 1 et 2, **caractérisé en ce qu'**on utilise du CO₂ pollué par en tout de 0,5 à 10 % en volume, notamment de 0,5 à 2, 5 % en volume, d'un ou plusieurs des constituants N₂, CO, H₂ et CH₄.

4. Procédé suivant l'une des revendications 1 à 3, **caractérisé en ce qu'**on ajoute le gaz d'entraînement chargé d'un ou de plusieurs des constituants N₂, CO, H₂ et CH₄ au gaz brut.

5. Procédé suivant l'une des revendications 1 à 4, **caractérisé en ce qu'**on condense une partie du gaz d'entraînement chargé d'un ou de plusieurs des constituants N₂, CO, H₂ et CH₄, on renvoie le produit condensé dans le bassin de la colonne d'absorption et on ajoute le gaz d'entraînement restant au gaz brut.

6. Procédé suivant les revendications 1 à 5, **caractérisé en ce qu'**on envoie le gaz d'entraînement chargé d'un ou de plusieurs des constituants N₂, CO, H₂ et CH₄ à l'étage d'absorption du processus.
